# EUROPEAN PATENT APPLICATION

(11) **EP 4 489 407 A1**
(43) Date of publication of application: **08.01.2025**
(21) Application number: 22942849.5
(22) Date of filing: 08.11.2022
(51) Int. Cl.: H04N 21/431, H04N 21/436, H04N 21/4363, H04N 21/458

(54) **HOME APPLIANCE AND SERVER FOR PROVIDING INTERACTIVE MULTIMEDIA CONTENT**

(30) Priority: 17.05.2022 KR 20220060399
(71) Applicant: LG Electronics Inc., Yeongdeungpo-gu Seoul 07336 (KR)
(72) Inventor: KIM, Myong Sun, Seoul 08592 (KR); LEE, Jihyun, Seoul 08592 (KR)
(74) Representative: Vossius & Partner Patentanwälte Rechtsanwälte mbB
(86) International application number: PCT/KR2022/017401
(87) International publication number: WO 2023/224186

(57) **Abstract**

The present invention relates to a home appliance and a server for providing interactive multimedia content, and the home appliance for providing interactive multimedia content according to an embodiment of the present invention comprises: a communication unit which communicates with a server or a user device; a display unit which visually outputs multimedia content; and a control unit which controls the display unit to output the multimedia content according to an operation of the home appliance, wherein the multimedia content is upgraded by the server or the control unit.

## Description

### [Technical Field]

The present disclosure relates to a home appliance and server that provides interactive multimedia contents.

### [Background Art]

Recently, as a home appliance includes computing technology, research is being done on how the home appliance may provide various information. Conventionally, a speaker and a display screen disposed in the home appliance output information such as images, text, and videos, and a user inputs information using buttons or touch screens.

However, this information is integrated into the home appliance and is commonly applied to all users. Therefore, users may be indifferent to the information they encounter when using the home appliance and may simply react to the information.

This means that the home appliance outputs the information only when the user is configured to control the home appliance. Thus, there is a limit to the home appliance's ability to provide appropriate information to the user.

Accordingly, a scheme is required in which the home appliance may provide information or operate appropriately to the user's intention or status through user control.

### [Disclosure]

### [Technical Problem]

A purpose of the present disclosure is to solve the above-mentioned problem and thus is to allow various multimedia contents to be output depending on an operation of the home appliance.

A purpose of the present disclosure is to solve the above-mentioned problem and thus is to allow multimedia contents to be upgraded based on a usage pattern of the home appliance and the upgraded multimedia contents to be output from the home appliance and a user device.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

### [Technical Solutions]

A home appliance for providing interactive multimedia contents according to an embodiment of the present disclosure includes a communication unit configured to communicate with a server or a user device; a display unit configured to visually output multimedia contents; and a controller configured to control the display unit to output the multimedia contents in response to an operation of the home appliance, wherein the multimedia contents is upgraded by the server or the controller.

A server for providing interactive multimedia contents according to an embodiment of the present disclosure includes a server communication unit configured to receive data collected by a home appliance during an operation of the home appliance from the home appliance; and a server controller configured to upgrade multimedia contents to be output from the home appliance, using the collected data, wherein the server communication unit is configured to transmit the upgraded multimedia contents to the home appliance.

### [Advantageous Effects]

In accordance with the present disclosure, various multimedia contents may be output depending on the operation of the home appliance.

In accordance with the present disclosure, the multimedia contents may be upgraded based on the usage pattern of the home appliance and thus, the upgraded multimedia contents may be output from the home appliance and the user device.

The effects of the present disclosure are not limited to the effects as described above, and various effects of the present disclosure may be easily derived from the configuration of the present disclosure.

### [Brief Description of Drawings]

FIG. 1 is a diagram showing a configuration of a home appliance according to an embodiment of the present disclosure.
FIG. 2 is a diagram showing interaction between a home appliance, a server, and a user device according to an embodiment of the present disclosure.
FIG. 3 is a diagram showing a display process of an acticon according to one embodiment of the present disclosure.
FIG. 4 is a diagram showing an operation process of a refrigerator and a user device according to an embodiment of the present disclosure.
FIG. 5 is a diagram showing a process in which a controller of a home appliance collects information and displays an acticon according to an embodiment of the present disclosure.
FIG. 6 is a diagram showing a process in which a controller of a home appliance collects information and transmits the collected information to a server according to an embodiment of the present disclosure.
FIG. 7 is a diagram showing an example of use of an acticon according to an embodiment of the present disclosure.
FIG. 8 is a diagram showing a configuration of a server according to an embodiment of the present disclosure.
FIG. 9 is a diagram showing an acticon displayed on a user device according to one embodiment of the present disclosure.

### [Detailed Description of Exemplary Embodiments]

Hereinafter, with reference to the drawings, embodiments of the present disclosure will be described in detail so that those skilled in the art may easily perform the embodiments. The present disclosure may be implemented in several different forms and is not limited to the embodiments described herein.

In order to clearly describe the present disclosure, contents unrelated to the description are omitted, and identical or similar elements are given the same reference numerals throughout the present disclosure. Furthermore, some embodiments of the present disclosure are described in detail with reference to illustrative drawings. In adding reference numerals to components in the drawings, identical components may have the same reference numerals as much as possible even when they are shown in different drawings. Furthermore, when describing the present disclosure, when it is determined that a detailed description of the structure or function known to the skilled person to the art may obscure the gist of the present disclosure, the detailed description thereof may be omitted.

When describing the components of the present disclosure, terms such as first, second, A, B, (a), and (b) may be used. These terms are only used to distinguish the component from another component, and the nature, sequence, order, or number of the component are not limited by the terms. When a component is described as being "connected," "coupled", or "combined" to another component, the component may be directly connected or coupled to the another component, or still another component may be "interposed" therebetween or the component may be "connected," "combined," or "connected" thereto via still another component.

Furthermore, in implementing the present disclosure, the component may be described in a subdivided manner for convenience of description. However, components may be integrated into one device or module, or one component may be implemented in a distributed manner into devices or modules.

Hereinafter, the home appliance described in the present disclosure refers to an electronic device used in home or offices, such as home products. The home appliance may include predetermined computing functions and communication functions. In one embodiment, the home appliance includes refrigerators, washing machines, air purifiers, dryers, TVs, ovens, water purifiers, digital picture frames, clothes care machines, dishwashers, etc.

The user device described in the present disclosure is a device that provides communication and computing functions, such as smartphones, tablets, laptops, and computers, owned by the user of the home appliance.

In the present disclosure, both the home appliance and the user device may visually display predetermined multimedia contents and the multimedia contents may change depending on the user's home appliance/user device usage patterns. Hereinafter, as used herein, interactive multimedia contents is referred to as an acticon.

The acticon is an example of a dynamic icon that personifies the home appliance. Furthermore, the user may use the user device to identify that the acticon represents a status of the home appliance.

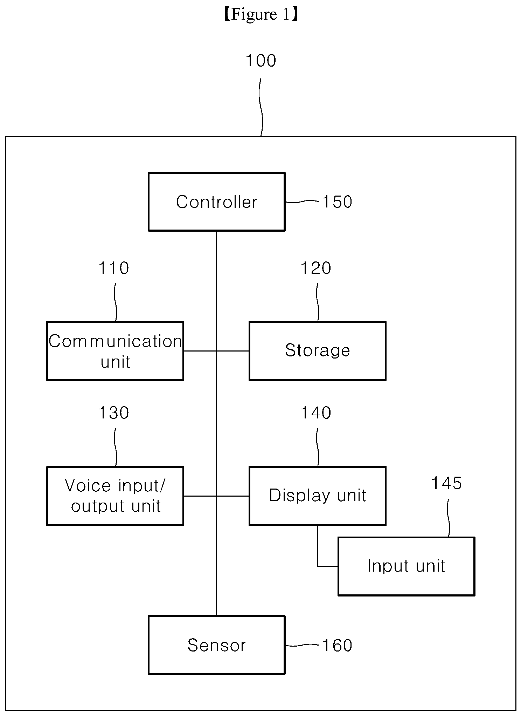

FIG. 1 is a diagram showing a configuration of a home appliance according to an embodiment of the present disclosure.

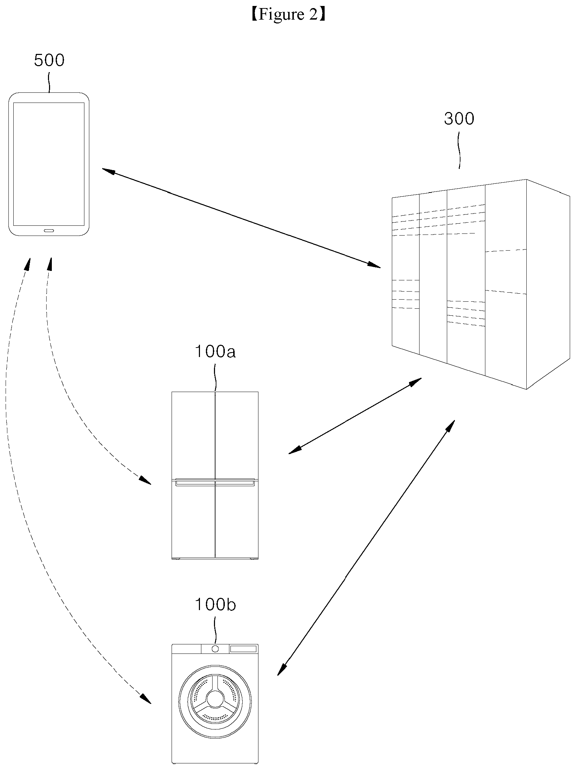

A communication unit 110 may communicate with a server (300 in FIG. 2) or a user device (500 in FIG. 2). The communication unit 110 includes a modem, a communication module, a communication interface, a WiFi module, or a 5G communication module in one embodiment. The display unit 140 visually outputs the acticon as the multimedia contents, and includes various device such as LCD, OLED, and LED in one embodiment.

A controller 150 may control the display unit 140 so that the display unit 140 outputs multimedia contents in response to the operation of the home appliance. In this regard, the multimedia contents may be output in various ways depending on the operation of the home appliance, and the controller 150 may load the multimedia contents stored in storage 120 in response to the operation of the home appliance and provide the same to the display unit 140. The controller 150 may include one or more of a control controller, a software module for control, or a hardware module for control.

Furthermore, the multimedia contents, that is, the acticon may be upgraded by the server (300 in FIG. 2) or by the controller 150 of the home appliance 100.

The home appliance 100 includes the display unit 140 that outputs various multimedia contents, and a voice input/output unit 130 that outputs sounds, voices, function sounds, etc. and receives a user's voice input.

Furthermore, the home appliance may provide a predetermined input unit 145. When an input from the user is a touch input, the display unit and the input unit may be integrated with each other.

The controller 150 may control the operation of the home appliance 100, and the communication unit 110 may communicate with the server or the user device. The storage 120 may store therein the acticon and information on the user's usage of the home appliance 100.

In one example, although not shown in the drawing, the home appliance 100 may perform predetermined functions (TV, laundry, refrigeration-freezing function, clothing management function, etc.). The function as performed by the home appliance varies depending on whether the home appliance 100 is a TV, a washing machine, a refrigerator, a clothes care machine, etc.

The controller 150 may generate the acticon that varies depending on the number of operations, an operation time, or an operation pattern of the home appliance and display the acticon on the display unit 140. In one embodiment, the acticon may be a dynamic image personifying the home appliance 100.

Furthermore, the controller 150 may control the operation of the home appliance 100 using a value sensed by a sensor 160. The sensor 160 includes a human body detection sensor that detects a person's approach, a camera sensor that photographs an inner space of the home appliance, or surroundings around the home appliance, and a temperature sensor that detects a temperature.

Furthermore, the sensor 160 may sense the operating state of the home appliance.

The storage 120 may store therein the multimedia contents and information related to a condition under which the multimedia contents may be output. For example, the storage may store therein operation identification information about the operation of the home appliance 100 and the multimedia contents corresponding to the operation identification information. For the refrigerators, refer to Table 1 as set forth below.

**Table 1**

| Information sensed by sensor | Operation identification information | Multimedia contents |
|---|---|---|
| Door open sensor: True | DOOR_OPEN | ACTICON_WORKING |
| Door open sensor: False | DOOR_CLOSE | ACTICON_GOODBYE |
| Human body sensor: True | HUMAN_APPROACH | ACTICON_WELCOME |

According to Table 1, each sensor generates a specific value (True/False) and provides the value to the controller. The controller 150 is configured to identify multimedia contents that currently needs to be output, based on the information stored in the storage 120, such as Table 1 and the information sensed by the sensor. Then, the display unit 140 outputs the identified multimedia contents under the control of the controller 150.

FIG. 2 is a diagram showing interaction between the home appliance, the server, and the user device according to an embodiment of the present disclosure.

The home appliance 100a and 100b may transmit and receive information to and from the server 300. The user device 500 may also transmit and receive information to and from the server 300. Furthermore, the communication may be performed between the home appliance 100a and 100b and the user device 500 based on a communication scheme such as short-distance communication.

The home appliance 100a and 100b may change the acticon in response to the user's use of the home appliance. The home appliance 100a and 100b may receive information related to the acticon from the server 300. Furthermore, the home appliance 100a and 100b transmits information about the operation of the home appliance 100a and 100b to the server 300 and then receives from the server 300 the acticon corresponding to the transmitted information or information related to the acticon.

In one example, the user may use the user device 500 to set his/her preferred image, his/her own photo, or an image he/she created as an acticon. The set image, etc. may be uploaded to the server 300, and then may be converted appropriately so as to be displayed on the home appliance 100a and 100b, and then may be transmitted to the home appliance 100a and100b.

In other words, the acticon may include some of images or videos provided from the server 300 or the user device 500. For example, when the user device 500 transmits a facial image of the user or a video including a motion of the user to the home appliance 100 directly or to the home appliance 100 via the server 300, the home appliance 100 may combine the transmitted image or video into the acticon as the multimedia contents. The image or the video may be combined with a separate sound or an audio recording. In this case, the acticon may provide visual and auditory information.

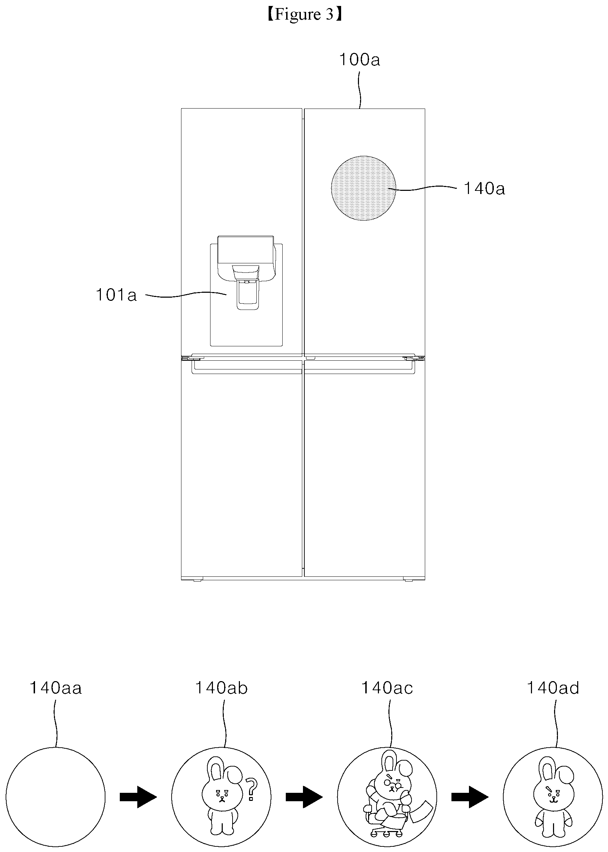

FIG. 3 is a diagram showing a display process of the acticon according to one embodiment of the present disclosure. FIG. 3 shows an example where the home appliance is a refrigerator. The display unit 140a disposed on the refrigerator 100a may output various multimedia contents (acticon) such as actions 140aa to 140ad when a user uses the refrigerator or during a specific operation of the refrigerator.

The sensor 160 of the refrigerator may detect the opening or closing of the door of the refrigerator 100a or may detect a product input or output into or from the refrigerator 100a.

In this case, the controller 150 of the refrigerator 100a selects one multimedia contents from among the plurality of multimedia contents stored in the storage 120 in response to opening or closing of the door or the detection of the product input or output into or from the refrigerator 100a. Then, the display unit 140a may output the multimedia contents selected by the controller 150.

In one embodiment, when the user approaches the refrigerator 100a, the sensor 160 disposed on the refrigerator 100a may detect the user's approach thereto and display an image welcoming the user's approach, such as the acticon 140aa. Further, when the user opens the door of the refrigerator 140aa and puts the product into the refrigerator, the display unit 140a may display the acticon 140ab while waiting for input from the user.

In one example, in relation to the input of the product into the refrigerator, the user may input product-related information (salad, fruit for lunch tomorrow, etc.) into the refrigerator 100a by voice. The voice input information may be sensed by the voice input/output unit 130 of the refrigerator 100a.

Afterwards, when the user closes the refrigerator door, the refrigerator 100a may perform a process of object recognition of the product input into the refrigerator. During this process, the display unit 140a may display the acticon 140ac. The controller 150 of the refrigerator 100a may process the user's input about the product-related information by the voice and may later use the processed input as notification information.

Afterwards, the refrigerator 100a may output the notification information such as the acticon 140ad to the display unit 140a to inform the user of the information related to the product. Furthermore, the notification information such as the acticon 140ad may be output through the user device 500.

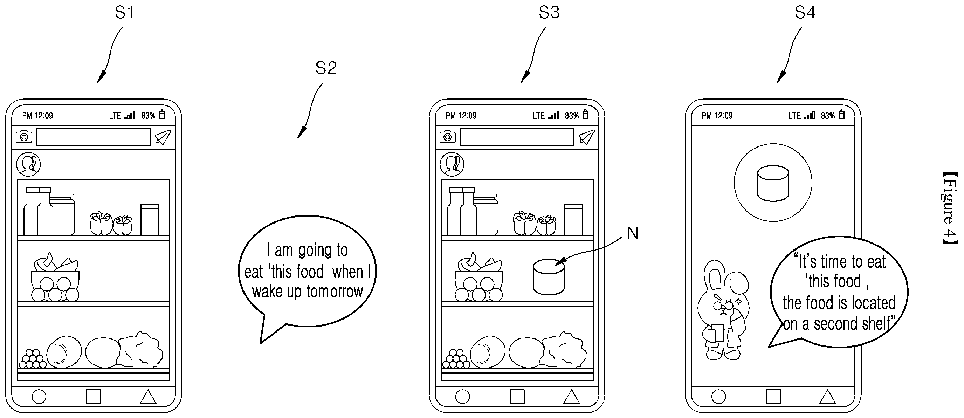

FIG. 4 is a diagram showing an operation process of the refrigerator and the user device according to an embodiment of the present disclosure.

S1 refers to a case where the inner receiving space of the refrigerator 100a has been imaged. The refrigerator 100a performs imaging to identify locations of the products within the receiving space of the refrigerator. Afterwards, the user opens the door of the refrigerator 100a, puts the products into the receiving space, and makes a voice input saying, "I am going to eat this food when I wake up tomorrow" in S2. Afterwards, when the user closes the door of the refrigerator 100a, the refrigerator 100a images the inner receiving space again in S3, and compares the image taken in S1 with the image taken in S3 and identifies that the product indicated by N has been newly input into the receiving space thereof.

Then, upon identifying that the product indicated by N has been newly input into the receiving space, the controller 150 of the refrigerator 100a sends the product image and a message (this product is a food for the user to eat when the user wakes up tomorrow) to the server 300 so that an alarm including the message is sent to the user device 500 at the time at which the user is scheduled to eat the product. In this regard, the controller 150 of the refrigerator 100a may transmit location information of the product within the refrigerator 100a to the server 300.

Afterwards, the server 300 stores the received information therein and then sends the user device 500 the image of the product and the message "It's time to eat this food, the food is located on a second shelf" at the set time (morning time or when use of the user device by the user begins, etc.) in S4.

The user's home appliance may have various outer appearances depending on how the user uses the home appliance. That is, it is assumed that there are User_1 and User_2 who use the same type of the refrigerators A and B, respectively. A color or a shape of the acticon of the refrigerator A may change depending on the usage pattern of User_1 who uses the refrigerator A.

For example, when the refrigeration temperature of the refrigerator A is lower than a reference value, or when User_1 frequently eats the food in a freezer compartment, the acticon of the refrigerator A may be blue. Furthermore, the acticon of the refrigerator A may include an image symbolizing an ice.

On the other hand, when the refrigeration temperature of the refrigerator B is higher than the reference value, or when User_2 does not use the refrigerator often, or rarely eats the food in the freezer compartment, the acticon of the refrigerator B may be red. Furthermore, the acticon of the refrigerator B may include an image symbolizing water.

Similarly, it is assumed that there are User_1 and User_2 who use the same type of water purifiers C and D, respectively. The color or the shape of the acticon of the water purifier C may change depending on the usage pattern of User_1 who uses the water purifier C. For example, when User_1 frequently consumes ice water purified from the water purifier C, the acticon of the water purifier C may include an image symbolizing the ice.

On the other hand, when the usage pattern of User_2 of the water purifier D indicates frequently consuming warm water, the acticon of the water purifier D may include an image symbolizing a warm cup.

These acticons may be downloaded from the user device of each of the User_1 and User_2. Furthermore, the acticon may be applied when symbolizing the user within the metaverse in which the User_1 and User_2 participate, or when symbolizing the user's home appliance within the metaverse.

FIG. 4 may be summarized as follows. The multimedia contents such as the acticon may be upgraded in various ways, especially depending on the user's usage pattern of the home appliance. As a result, although the users A and B use the same type of the home appliances, respectively, the home appliance owned by the user A and the home appliance owned by the user B may output different acticons depending on the user's usage patterns of the users A and B.

In one embodiment, it is assumed that the number of withdrawals of the products from the freezer compartment of the refrigerator 100a is equal to or greater than a reference number during a predetermined period, or the number of times the ice is consumed from a purified water dispenser 101a installed in the refrigerator 100a is equal to or greater than a reference number of times during a predetermined period.

In this case, the controller 150 determines that the refrigerator 100a has the usage pattern of a high consuming frequency of a cold food. Thus, the controller 150 may include the ice image into the multimedia contents. Alternatively, after the communication unit 110 transmits the above usage pattern information to the server 300, the communication unit 110 may receive multimedia contents including the ice image from the server 300.

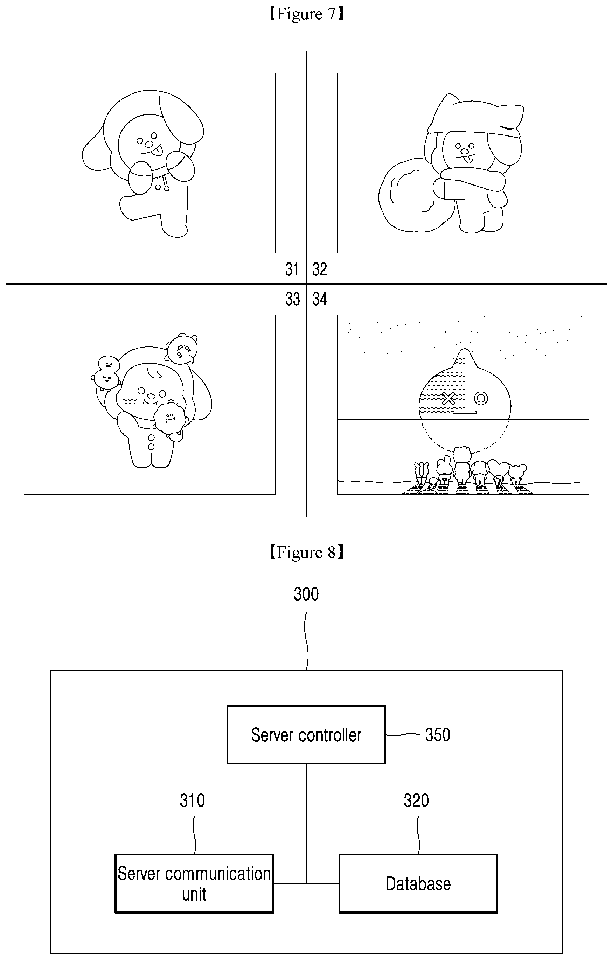

The upgrading of the multimedia contents in this manner may be performed on the server 300. For example, a server communication unit (310 in FIG. 8) may receive, from the refrigerator 100a, data collected by the sensor 160 of the refrigerator 100a detecting the opening and closing of the door of the refrigerator or detecting products received into or withdrawn from the refrigerator 100a.

Then, upon determination that the number of withdrawals of products from the freezer room of the refrigerator 100a is equal to or greater than the reference number of times during a predetermined period of time, or the number of times the ice is consumed from the purified water dispenser 101a installed in the refrigerator 100a is equal to or greater than the reference number of times during a predetermined period of time, a server controller (350 in FIG. 8) may contain the ice image into the multimedia contents to upgrade the multimedia contents.

In this regard, the ice is merely one example of the food that may be applied to the home appliance as the refrigerator. In addition, the home appliance may be embodied as the washing machine. In this case, when special clothing is frequently washed, an outfit of the acticon displayed on the washing machine may change based on the special clothing.

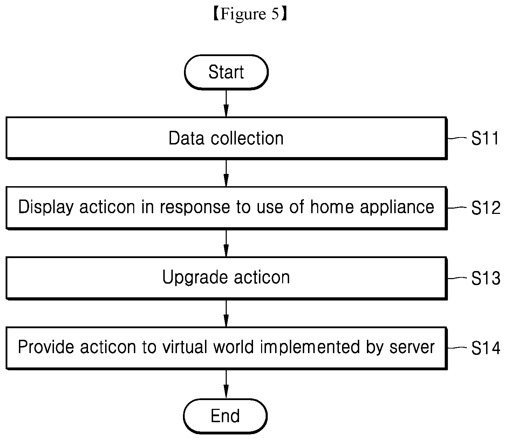

FIG. 5 is a diagram showing a process in which a controller of a home appliance collects information and displays an acticon based on the information according to an embodiment of the present disclosure. FIG. 5 shows a process in which the controller of the home appliance collects information and evolves the acticon based on the information that is, upgrades the acticon, based on the information. FIG. 5 shows the process in which the controller 150 of the home appliance 100 collects data generated during the operation of the home appliance 100 and then upgrades the acticon as multimedia contents, using the collected data.

The controller 150 of the home appliance 100 collects data generated while the user uses the home appliance 100 in S11. The data collected by the controller 150 of the home appliance 100 includes real-time home appliance data and life fingerprint small data.

The real-time home appliance data includes information sensed by the sensor 160 of the home appliance 100. The life fingerprint small data is data of hyper-personalized life fingerprints in the process of using the home appliance. In addition, the controller 150 of the home appliance 100 may collect various data generated during the operation of the home appliance 100.

Furthermore, during use of the home appliance, the controller 150 displays an acticon on the display unit 140 in S12. In this process, the controller 150 of the home appliance 100 may repeatedly perform step S11.

Furthermore, the controller 150 of the home appliance 100 upgrades the acticon in S13. The upgrading of the acticon means changing the outer appearance thereof, a motion thereof, and a sound including the voice provided from the acticon. Furthermore, when the acticon provides a predetermined function, the controller 150 of the home appliance 100 may change the number of functions that the acticon may provide.

The acticon may be upgraded using records (based on collected data) of the user's use of the home appliance 100 so as to be adapted in response to the user's use of the home appliance 100. Furthermore, the acticon may be upgraded to provide feedback on the user's use of the home appliance 100. Accordingly, the upgrade of the acticon may be performed to change the appearance and the operation of the acticon based on the user's usage pattern of the home appliance 100 or the user's life pattern.

In one example, the controller 150 of the home appliance 100 may provide the acticon to the server 300 so that the acticon may be used in the virtual world implemented in the server 300 in S14. The server 300 builds the virtual world such as a metaverse so that users may control their acticons like avatars in the virtual world. The virtual world in which the acticon operates may be referred to as Umeverse. The user may control his/her user device 500 to move his/her acticon in the virtual world such as the Umeverse to challenge and complete a predetermined mission or perform economic activities.

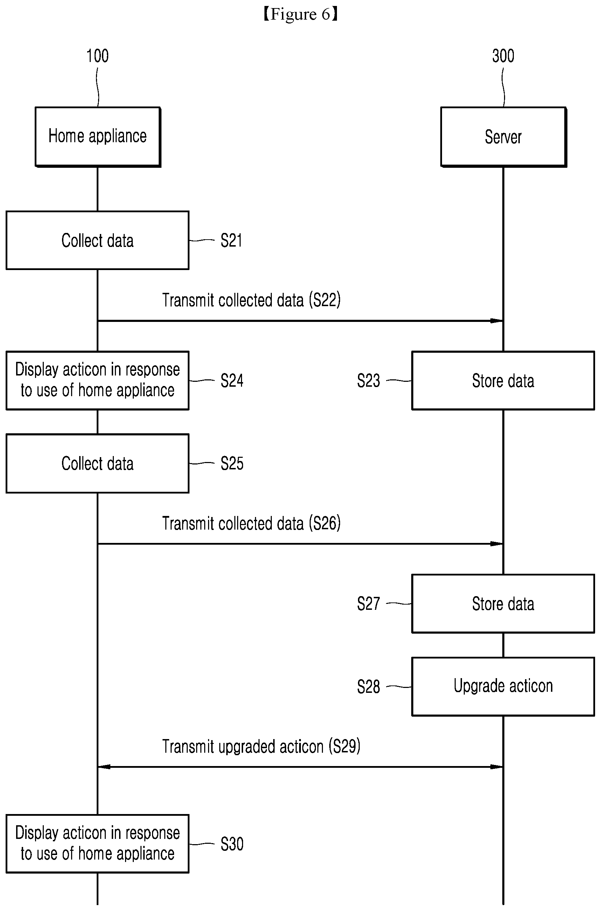

FIG. 6 is a diagram showing a process in which a controller of a home appliance collects information and transmits the collected information to the server according to an embodiment of the present disclosure. The server 300 may upgrade the acticon using the information collected by the home appliance controller. After the controller 150 of the home appliance 100 collects data generated during the operation of the home appliance 100, the communication unit 110 of the home appliance 100 transmits the collected data to the server 300.

Then, when the server 300 transmits the upgraded multimedia contents, that is, the upgraded acticon, the communication unit 110 receives the upgraded multimedia contents, that is, the upgraded acticon. Afterwards, the controller 150 may control the display unit 140 so that the upgraded multimedia contents may be output on the display unit 140 even under the same operation situation of the home appliance.

The home appliance 100 collects data in S21. This is the same as S11 as described above in FIG. 5. Then, the home appliance 100 transmits the collected data to the server 300 in S22. The server 300 stores the data together with the identification information of the home appliance 100 in database in S23.

In one example, the home appliance 100 displays the acticon related to the use of the home appliance in S24. Then, data is collected again according to the use of the home appliance in S25, and the collected data is transmitted to the server 300 in S26. Likewise, the server 300 stores the data along with the identification information of the home appliance 100 in the database in S27.

The server 300 upgrades the acticon using the accumulated and stored data according to a predetermined rule in S28. As described above in S13 in FIG. 5, the acticon may be upgraded. That is, the server 300 may change the appearance of the acticon, the motion thereof, and the sound including the voice provided from the acticon. Furthermore, the server 300 may change the number of functions that the acticon may provide.

The acticon may be upgraded using records (based on collected data) of the user's use of the home appliance 100 so as to be adapted in response to the user's use of the home appliance 100. Furthermore, the acticon may be upgraded to provide feedback on the user's use of the home appliance 100. Accordingly, the upgrade of the acticon may be performed to change the appearance and the operation of the acticon based on the user's usage pattern of the home appliance 100 or the user's life pattern.

Afterwards, the server 300 transmits the upgraded acticon to the home appliance 100 in S29. Then, when the home appliance use occurs, the home appliance 100 displays the acticon based on the usage pattern of the home appliance 100 in S30.

FIG. 7 is a diagram showing an example of use of the acticon according to an embodiment of the present disclosure. In an example in which the refrigerator is the home appliance 100, the process in which the acticon of FIG. 7 is displayed on the display unit 140a of the refrigerator 100a is shown. As previously discussed, FIG. 5 shows an example in which the home appliance 100 performs an acticon upgrade, and FIG. 6 shows an example in which the server 300 performs an acticon upgrade.

The acticon upgraded based on each of the embodiments of FIG. 5 and FIG. 6 may provide the user with a sense of intimacy when using the home appliance 100. Furthermore, the acticon may interact with the user, and the user may more clearly identify the operating state of the home appliance 100.

A reference numeral 31 shows an acticon that welcomes the user based on the number of times the user uses the home appliance, a usage time thereof, etc. The acticon may take a form of a character smiling, spreading its arms, or jumping. In one example, a reference numeral 32 shows an acticon that provides information about the refrigerator 100a to the user. The acticon represents the character rolling a snowball to create the ice. In one embodiment, the refrigerator 100a may display the acticon 32 on the display unit 140a to indicate the ice-making process of the refrigerator.

In addition, an acticon 33 indicating as a mission to eat food whose expiration date is approaching a current day may be displayed on the refrigerator 100a. Furthermore, an acticon 34 may be displayed in the metaverse community on a specific day (New Year, Christmas, etc.), and may interact with other users' acticons.

The controller 150 of the home appliance 100 may store N acticons therein and display a related acticon on the display unit 140 based on the operating state of the home appliance 100.

The acticon may be displayed not only on the display unit 140 of the home appliance 100 but also on a display of the user device 500 in a synchronization manner with each other.

As shown in FIG. 7, different multimedia contents may be output on the display unit 140 of the home appliance 100, in response to different operations of the home appliance.

For example, the display unit 140 of the home appliance 100 may output first multimedia contents in response to a first operation (for example, DOOR_OPEN in Table 1) of the home appliance 100 under the control of the controller 150. The display unit 140 of the home appliance 100 may output second multimedia contents in response to a second operation (for example, DOOR_CLOSE in Table 1) of the home appliance 100 under the control of the controller 150.

In this case, in one embodiment of the present disclosure, the upgrade may be performed on all multimedia contents. Furthermore, in another embodiment of the present disclosure, the upgrading may mean changing one or more of the first multimedia contents or the second multimedia contents. The changing may include changing one or more of the color, an image, a video, an icon, a voice, or a sound that constitutes the first multimedia contents or the second multimedia contents.

FIG. 8 is a diagram showing a configuration of a server according to an embodiment of the present disclosure.

The server 300 includes a server controller 350, a server communication unit 310, and database 320.

The server communication unit 310 receives data collected by the home appliance 100 during the operation of the home appliance 100 from the home appliance 100. Then, the server controller 350 upgrades the multimedia contents to be output from the home appliance 100, based on the collected data. In one example, the server communication unit 310 transmits the upgraded multimedia contents to the home appliance 100 so that the home appliance 100 may output the multimedia contents based on the usage pattern thereof. That is, the home appliance 100 may output the upgraded acticon.

The multimedia contents may be set in various ways depending on the operation of the home appliance 100. Accordingly, the home appliance 100 may output the first multimedia contents, the second multimedia contents, etc. based on the operations of the home appliance 100. Then, the server controller 350 may upgrade the multimedia contents by changing one or more of the first multimedia contents or the second multimedia contents.

In this regard, the changing may include changing at least one of the color, the image, the video, the icon, the voice, or the sound that constitutes the first multimedia contents or the second multimedia contents.

The server 300 stores therein the acticon corresponding to the home appliance. When the home appliance is replaced with new one in the future, the acticon may be transmitted to the new one. The server 300 may transmit the acticon generated based on the accumulated usage patterns of the user to the same model or a compatible model.

For example, it is assumed that regarding a refrigerator of a model A, A_a_refrigerator and A_b_refrigerator are compatible with each other. The acticon may be upgraded to include various images/videos based on a result of the user's use of the A_a_refrigerator. In this regard, when the user purchases the A_b_refrigerator, the server 300 allows the acticon applied to the A_a_refrigerator to be displayed on the A_b_refrigerator. As a result, when the user replaces the refrigerator with new one, the new refrigerator may display the acticon seamlessly.

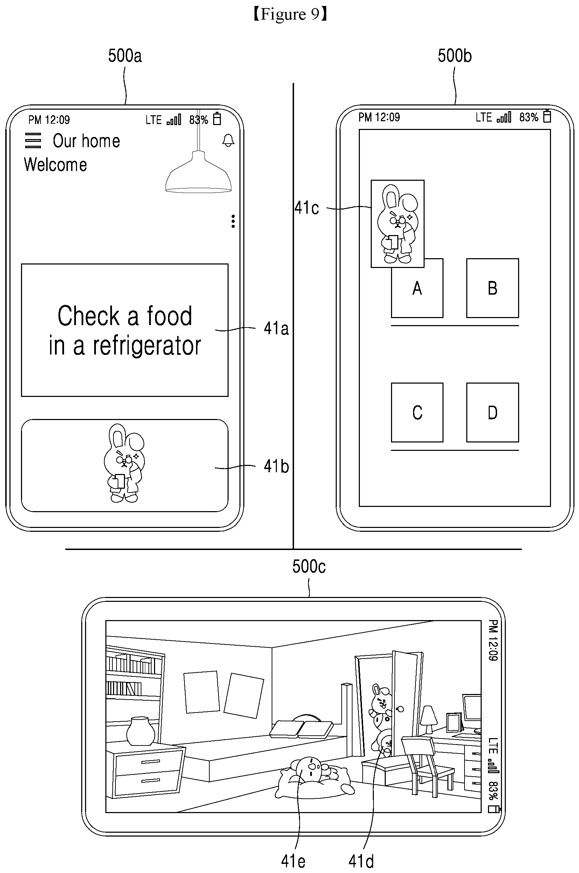

FIG. 9 is a diagram showing an acticon displayed on the user device according to one embodiment of the present disclosure. FIG. 9 shows the process in which a user device 500a linked to the home appliance 100 outputs multimedia contents (acticon). In particular, the communication unit 110 of the home appliance 100 transmits information about the operation of the home appliance 100 to the user device 500a or the server 300.

The communication unit 110 of the home appliance 100 may directly transmit information about the operation of the home appliance 100 to the user device 500a using short-distance communication or according to a separate communication protocol.

Furthermore, the communication unit 110 of the home appliance 100 may transmit information about the operation of the home appliance 100 to the server 300. Then, the server 300 may transmit the received information to the user device 500a.

A message 41a and an acticon 41b to notify the user to check the food in the refrigerator as the home appliance are displayed on the user device 500a. As a result, the user of the user device may touch the acticon 41b on the user device to check the inner receiving space of the refrigerator. The user of the user device 500b may check products A, B, C, and D stored in the refrigerator.

The user device 500b projected and displayed an acticon 41c on the image captured by the camera mounted in the home appliance. The user may identify that the acticon 41c is displayed in an overlapping manner with the product A so as to notify the user to perform a specific action on the product A. Thus, the user may check the expiration date of the product A, or may check whether the product A is a product that should be taken out of the refrigerator according to the user's schedule.

Furthermore, even when the acticon is not displayed, the user may identify information in the process of using the home appliance 100 using the voice message set in the acticon. For example, even when the user does not check the display unit 140 while opening the refrigerator door, the home appliance 100 may provide information on how to use the home appliance, an alarm, etc. using a specific voice set in the acticon.

Furthermore, the server controller 350 may transmit information necessary to display the virtual world of the metaverse to the user device 500. In this regard, the transmitted information may include the multimedia contents. That is, the acticon may be displayed within the virtual world of the metaverse and may act as an avatar within the metaverse. The acticon may move or act like the avatar under the control of the user device 500.

In other words, the user device 500c may control each of acticons 41d and 41e respectively representing the home appliances within the virtual world such as the metaverse. The server 300 may implement the virtual world such as the metaverse, and may control each of the acticons 41d and 41e corresponding to the home appliances 100 to act like the avatar within the metaverse. Each of the acticons 41d and 41e may be controlled using the user device 500c.

Furthermore, when multiple users participate in the metaverse, each of user devices may control each of acticons to interact with other acticons within the metaverse and to perform economic activities, entertainment, games, etc. within the metaverse. Since each of the acticons is upgraded based on the use of the home appliance 100, the user may be motivated to use the home appliance 100 and a possibility of using various functions provided by the home appliance 100 may be increased.

In particular, in the process of continuous development of the functions of the home appliance 100, gaming elements may be combined with the acticon so that the users may fully utilize the functions of the home appliance 100.

The acticon may be implemented as a character within the metaverse. Alternatively, the acticon may be implemented as a product within the metaverse. Furthermore, each of the users may control the acticon using the user device 500 to perform competitive tasks such as gamification or missions within the metaverse. Furthermore, each of the users may control the acticon using the user device 500 to create a community within the metaverse and perform activities within the community using the acticon.

In particular, the acticon may vary depending on the home appliance usage patterns of the user though the type of the home appliance is fixed. Thus, the acticon may provide gaming/entertainment elements.

As shown in FIG. 9, the communication unit 110 of the home appliance 100 transmits notification information set in the home appliance 100 to the server 300 or the user device 500. The user device 500 may display notification information received directly or indirectly from the home appliance 100 as indicated by reference numerals 500a and 500b. The notification information may include the acticon as the multimedia contents.

In an embodiment in which the user device 500 receives the notification information indirectly, the server communication unit 350 receives the notification information from the home appliance 100. Then, the server communication unit 350 may transmit the notification information to the user device 500 linked to the home appliance 100.

According to the above-described embodiments, the home appliance may be personified using the acticon (dynamic icon). Thus, various contents may be provided based on the acticon.

This allows the home appliance 100 not only to communicate with the user using voice recognition and artificial intelligence technology but also to display information more emotionally when providing a predetermined service to the user. That is, the home appliance 100 may use the multimedia contents such as the acticon to output a current status or information of the home appliance in a more intuitive/emotional manner.

When the multimedia contents such as the acticon is output through the home appliance, this may increase the number of times the user uses the home appliance. In addition, the information input from the user in response to the output of the personified acticon or the information related to the usage pattern of the home appliance may be stored in an accumulated manner in the server 300, thereby making it possible to upgrade the home appliance based on the usage pattern. Furthermore, an experience-based acticon may be output and upgraded to increase familiarity of the user with the home appliance 100. Further, in the process of using the home appliance 100, the user may more easily understand the information provided by the home appliance 100.

Furthermore, the usage pattern of the user of the home appliance 100 may be continuously accumulated and stored in the server 300. The acticon may be upgraded based on the accumulated usage pattern. The upgraded acticon may be displayed on the home appliance 100, and the user device 500 or in the metaverse. This may allow the use of the home appliance to be gamified. Furthermore, the acticon may be upgraded in a process of performing a predetermined mission provided within the metaverse.

In addition, a platform such as the Umeverse in which the acticon in the virtual world implemented by the server 300 may be distributed through character assetization may be implemented. Therefore, each of the users may sell the acticon thereof or upgrade the acticon based on an image/video that each user designs.

An embodiment of the present disclosure in which all the components are combined with each other or operate in combination with each other has been described. However, the present disclosure is not necessarily limited to this embodiment. Within the scope of the purpose of the present disclosure, at least two of all components may be selectively combined with other or may operate in the selectively combined manner with other. Furthermore, each of the components may be implemented as an independent hardware. However, some or all of the components may be selectively combined with each other and thus may be implemented using a computer program with a program module to perform some or all of the functions combined in one or more pieces of hardware. The codes and code segments that constitute the computer program may be easily deduced by a person skilled in the art from the present disclosure. The computer program may be stored in computer readable media and read and executed by a computer, thereby implementing the method of the present disclosure. The storage media for storing the computer program may include storage media including magnetic recording media, optical recording media, and semiconductor recording devices. Additionally, the computer program implementing an embodiment of the present disclosure includes a program module that is transmitted in real time through an external device.

The above description has been made based on the embodiment of the present disclosure. However, various changes or modifications may be made at the level of an ordinary technician. Therefore, it may be understood that such changes and modifications are included within the scope of the present disclosure as long as they do not go beyond the scope of the present disclosure.

### Reference numerals

100: Home appliance 300: Server
500: User device

## Claims

1. A home appliance for providing interactive multimedia contents, the home appliance comprising:
a communication unit configured to communicate with a server or a user device;
a display unit configured to visually output multimedia contents; and
a controller configured to control the display unit to output the multimedia contents in response to an operation of the home appliance,
wherein the multimedia contents is upgraded by the server or the controller.

2. The home appliance of claim 1, wherein the home appliance further comprises storage configured to store therein operation identification information about the operation of the home appliance and the multimedia contents corresponding to the operation identification information,
wherein the controller is configured to control the display unit to output the multimedia contents corresponding to the operation of the home appliance on the display unit,
wherein the operation identification information includes information sensed by a sensor of the home appliance.

3. The home appliance of claim 1, wherein the controller is configured to collect data generated during the operation of the home appliance and then to upgrade the multimedia contents using the collected data.

4. The home appliance of claim 1, wherein the controller is configured to collect data generated during the operation of the home appliance,
wherein the communication unit is configured to transmit the collected data to the server,
wherein the communication unit is configured to receive upgraded multimedia contents from the server.

5. The home appliance of claim 1, wherein the display unit is configured to output first multimedia contents in response to a first operation of the home appliance under control of the controller,
wherein the display unit is configured to output second multimedia contents in response to a second operation of the home appliance under control of the controller,
wherein the upgrading includes changing at least one of the first multimedia contents or the second multimedia contents,
wherein the changing includes changing at least one of a color, an image, a video, an icon, a voice, or a sound constituting the first multimedia contents or the second multimedia contents.

6. The home appliance of claim 1, wherein the user device linked to the home appliance outputs the multimedia contents,
wherein the communication unit is configured to transmit information about the operation of the home appliance to the user device or the server.

7. The home appliance of claim 1, wherein the home appliance is a refrigerator,
wherein the display unit outputs a plurality of multimedia contents,
wherein a sensor of the refrigerator detects opening and closing of a door of the refrigerator or detects inputting or withdrawal of a product into or out of the refrigerator,
wherein the controller is configured to select one multimedia contents from among the plurality of multimedia contents in response to the detection of the opening or closing of the door or the detection of the inputting or withdrawal of the product into or out of the refrigerator.

8. The home appliance of claim 7, wherein when a number of withdrawals of a product out of a freezer room of the refrigerator is equal to or greater than a reference number of times during a predetermined period of time, or
when a number of times ice is consumed from a purified water dispenser installed in the refrigerator is equal to or greater than a reference number of times during a predetermined period of time,
the controller is configured to contain an ice image into the multimedia contents, or the communication unit is configured to receive the multimedia contents containing an ice image therein from the server.

9. The home appliance of claim 1, wherein the multimedia contents include some of images or videos provided from the server or the user device.

10. The home appliance of claim 1, wherein the communication unit is configured to transmit notification information set in the home appliance to the server or the user device,
wherein the notification information includes the multimedia contents.

11. A server for providing interactive multimedia contents, the server comprising:
a server communication unit configured to receive data collected by a home appliance during an operation of the home appliance from the home appliance; and
a server controller configured to upgrade multimedia contents to be output from the home appliance, using the collected data,
wherein the server communication unit is configured to transmit the upgraded multimedia contents to the home appliance.

12. The server of claim 11, wherein the home appliance outputs first multimedia contents in response to a first operation thereof,
wherein the home appliance outputs second multimedia contents in response to a second operation thereof,
wherein the server controller is configured to change at least one of the first multimedia contents or the second multimedia contents,
wherein the changing includes changing at least one of a color, an image, a video, an icon, a voice, or a sound constituting the first multimedia contents or the second multimedia contents.

13. The server of claim 11, wherein the home appliance is a refrigerator,
wherein the refrigerator outputs a plurality of multimedia contents,
wherein the server communication unit is configured to receive data collected by a sensor of the refrigerator detecting opening and closing of a door of the refrigerator or detecting inputting or withdrawal of a product into or out of the refrigerator,
wherein when a number of withdrawals of a product out of a freezer room of the refrigerator is equal to or greater than a reference number of times during a predetermined period of time, or
when a number of times ice is consumed from a purified water dispenser installed in the refrigerator is equal to or greater than a reference number of times during a predetermined period of time,
the server controller is configured to contain an ice image into the multimedia contents to upgrade the multimedia contents.

14. The server of claim 11, wherein the multimedia contents include some of images or videos provided from the home appliance or a user device linked to the home appliance.

15. The server of claim 11, wherein the server communication unit is configured to receive notification information from the home appliance and to transmit the notification information to a user device linked to the home appliance,
wherein the notification information includes the multimedia contents.

16. The server of claim 11, wherein the server controller is configured to transmit information necessary to display a virtual world of the metaverse to a user device,
wherein the information includes the multimedia contents.
